# EUROPEAN PATENT SPECIFICATION

(11) **EP 1 787 350 B1**
(45) Date of publication and mention of the grant of the patent: **06.05.2009**
(21) Application number: 05782835.2
(22) Date of filing: 13.09.2005
(51) Int. Cl.: H01M 8/16

(54) **BIOCHEMICAL FUEL CELL**
BIOCHEMISCHE BRENNSTOFFZELLE
PILE A COMBUSTIBLE BIOCHIMIQUE

(30) Priority: 13.09.2004 GB 0420341
(43) Date of publication of application: 23.05.2007
(73) Proprietor: ISIS INNOVATION LIMITED, Summertown, Oxford OX2 7SG (GB); Humboldt-Universität zu Berlin, D-10099 Berlin (DE)
(72) Inventor: ARMSTRONG, Fraser, Andrew, Oxford OX2 8AA (GB); VINCENT, Kylie, Alison, London W2 3UA (GB); FRIEDRICH, Baerbel, 14163 Berlin (DE); LENZ, Oliver, 14169 Berlin (DE)
(74) Representative: Simons, Amanda Louise
(86) International application number: PCT/GB2005/003526
(87) International publication number: WO 2006/030196

(56) References cited:
- WO-A-03/019705
- WO-A-20/04114494
- PATENT ABSTRACTS OF JAPAN vol. 017, no. 232 (C-1056), 12 May 1993 (1993-05-12) -& JP 04 365474 A (CENTRAL RES INST OF ELECTRIC POWER IND), 17 December 1992 (1992-12-17) -& DATABASE WPI Section Ch, Week 199305 Derwent Publications Ltd., London, GB; Class D16, AN 1993-040500 XP002354342 & JP 04 365474 A (DENRYOKU CHUO KENKYUSHO) 17 December 1992 (1992-12-17)

## Description

The invention relates to fuel cells and methods of operating fuel cells.

Fuel cells are electrochemical devices that convert the energy of a fuel directly into electrochemical and thermal energy. Typically, a fuel cell consists of an anode and a cathode, which are electrically connected via an electrolyte. A fuel, which is usually hydrogen, is fed to the anode where it is oxidised with the help of an electrocatalyst. At the cathode, the reduction of an oxidant such as oxygen (or air) takes place. The electrochemical reactions which occur at the electrodes produce a current and thereby electrical energy. Commonly, thermal energy is also produced which may be harnessed to provide additional electricity or for other purposes.

Currently the most common electrochemical reaction for use in a fuel cell is that between hydrogen and oxygen to produce water. Molecular hydrogen itself may be fed to the anode where it is oxidised, the electrons produced passing through an external circuit to the cathode where oxidant is reduced. Ion flow through an intermediate electrolyte maintains charge neutrality. Fuel cells may also be adapted to utilise other hydrocarbon fuels such as methanol or natural gas.

Fuel cells have many advantages over traditional energy sources. The major attractions of these systems are their energy efficiency and their environmental benefits. Fuel cells can be operated at an efficiency which is higher than almost all other known energy conversion systems and this efficiency can be increased further by harnessing the thermal energy produced by the cell. Further, fuel cells are quiet and produce almost no harmful emissions, even when running on fuels such as natural gas, since the system does not rely on the combustion of the fuel. Particularly advantageous are cells which operate on hydrogen, as these systems produce no emissions other than water vapour and their fuel source is renewable.

There is therefore a significant interest in developing commercially viable fuel cells.

Aside from the obvious environmental benefits, there is a considerable need for a new and renewable source which will provide the necessary security, in terms of energy provision in the future, to our highly energy dependent society.

There are various barriers which have prevented the commercialisation of fuel cell technologies. One of the major obstacles is cost and, in particular, the cost of the electrocatalysts employed at both the cathode and the anode. Currently, the most commonly used electrocatalyst is platinum. Platinum is a very efficient catalyst and enables high currents to be produced in the fuel cell. However, it is very costly, of limited availability and is a significant contributor to the expense of the fuel cell.

A further difficulty with platinum is that it is irreversibly inactivated in the presence of carbon monoxide. Many sources of hydrogen gas also contain carbon monoxide impurities. The use of platinum catalysts therefore requires highly pure hydrogen fuel with extremely low carbon monoxide levels, further adding to the cost of operating the fuel cell.

Alternatives to platinum catalysts have been investigated, including the use of hydrogenase enzymes at the anode. For example, WO 03/019705 discusses the use of hydrogenase enzymes in fuel cells. These enzymes have been found to provide a catalytic efficiency comparable to that of platinum and although the activity of enzymes used in the prior art is reduced in the presence of carbon monoxide, they are not irreversibly inactivated. Furthermore, they can be produced at significantly lower cost than platinum, particularly if produced on a large scale. Hydrogenase enzymes are therefore a viable alternative to platinum in a commercial fuel cell.

However, hydrogenases have been found to be highly sensitive to the presence of oxygen, and become inactive over a period of time when used in a standard fuel cell operating with oxygen (or an oxygen containing material such as air) as the oxidant. Oxygen is capable of entering the hydrogenase active site where it is thought to react to form either water or peroxide. The production of water in this way has not been found to be problematic as the water molecule produced leaves the active site leaving it free for further reaction. However, when peroxide is formed, it has been observed that the hydrogenase molecule is rendered irreversibly inactive.

Where sufficient electrons are available in the system, oxygen which enters the active site of a hydrogenase molecule tends to react fully to form water. However, where insufficient electrons are present, peroxide may form and the hydrogenase may be rendered inactive. Since it is difficult to operate a fuel cell at full efficiency, typically at least some of the oxygen that reacts with hydrogenase will form peroxide, resulting in inactivation of the hydrogenase.

JP 404365474A discusses specific strains of hydrogen metabolising bacteria and hydrogenases isolated from these strains. These hydrogenases maintain activity after storage under aerobic conditions, although activity assays must still be carried out under anaerobic conditions.

Membranes can be used to reduce the presence of oxygen in the environment of the anode. However, the membranes that are currently available cannot completely prevent leakage of oxygen. Therefore, even when a membrane is used, oxygen presence around the anode cannot be completely avoided. Loss of catalytic activity of the hydrogenase therefore still occurs. Furthermore, membranes are expensive and complicate the design of the fuel cell. Membranes also increase the internal resistance of the cell, reducing its power output.

A new fuel cell is therefore required which reduces the problem of oxygen inactivation of hydrogenase catalysts in fuel cells and furthermore which address the difficulties of presently available membranes.

The present invention addresses the problem of oxygen inactivation of hydrogenase enzymes by providing a fuel cell in which the hydrogenase enzyme is capable of catalytic activity even in the presence of oxygen. Whilst some loss in activity is seen in the presence of oxygen, this loss of activity is temporary, and the enzyme very quickly recovers its full activity. This hydrogenase is therefore suitable for use in a fuel cell using oxygen (or an oxygen containing material such as air) as the oxidant, and is not rendered inactive even if small amounts of oxygen permeate any membrane placed between anode and cathode.

In a specific embodiment of the invention, the hydrogenase is used in a membraneless fuel cell. The ability of the hydrogenase to operate in the presence of oxygen means that an effective fuel cell can be produced without a membrane separating anode and cathode. In this embodiment, the ions in the electrolyte are free to move within the cell without having to pass through a membrane. The internal resistance of the cell is thus reduced, which in turn improves the efficiency of the cell. These membrane-less fuel cells therefore provide a very cheap, highly efficient and simple design of fuel cell, for which manufacture on a large scale can be envisaged.

The hydrogenases used in the present invention are not only tolerant to oxygen, but are also highly tolerant to carbon monoxide. The activity of the hydrogenases of the present invention has been found to remain substantially constant in the presence of carbon monoxide, whereas previously known hydrogenases showed a distinct loss of activity when such contaminants were present.

The present invention therefore provides a fuel cell which can be produced at low cost and which additionally has relatively low running costs. The fuel used for the cell can be a crude hydrogen gas which contains carbon monoxide impurities. Furthermore, the fuel cell operates effectively using presently available membrane technology, or even in the absence of a membrane.

The present invention accordingly provides a method of operating a fuel cell, which method comprises oxidising hydrogen at an anode having a catalyst adsorbed thereon, said catalyst comprising an oxygen tolerant hydrogenase enzyme. In one embodiment, the fuel cell includes a membrane located between the anode and the cathode. In an alternative embodiment, the fuel cell does not contain a membrane separating the anode and the cathode.

The present invention also provides a fuel cell comprising an anode having a catalyst adsorbed thereon, the catalyst comprising an oxygen tolerant hydrogenase enzyme. The fuel cell either contains, or does not contain, a membrane separating the anode and the cathode. The present invention also provides an electrode having a catalyst adsorbed thereon, the catalyst comprising an oxygen tolerant hydrogenase enzyme. The invention also provides use of such an enzyme as an electrocatalyst for the oxidation of hydrogenase at an electrode.

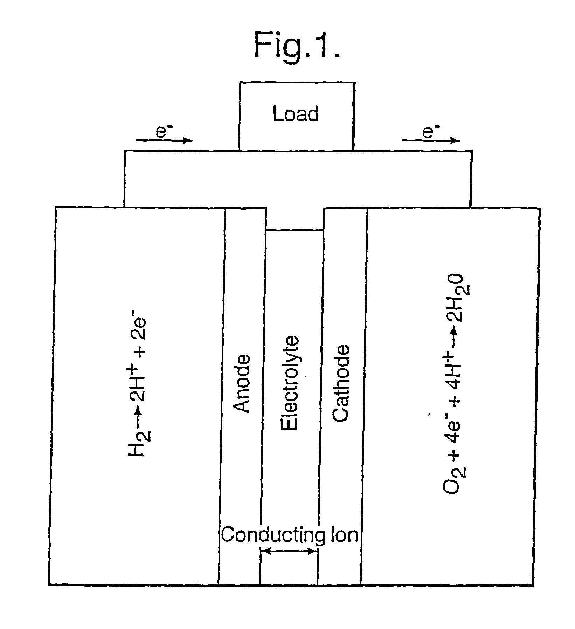

Figure 1 depicts a fuel cell according to the invention.

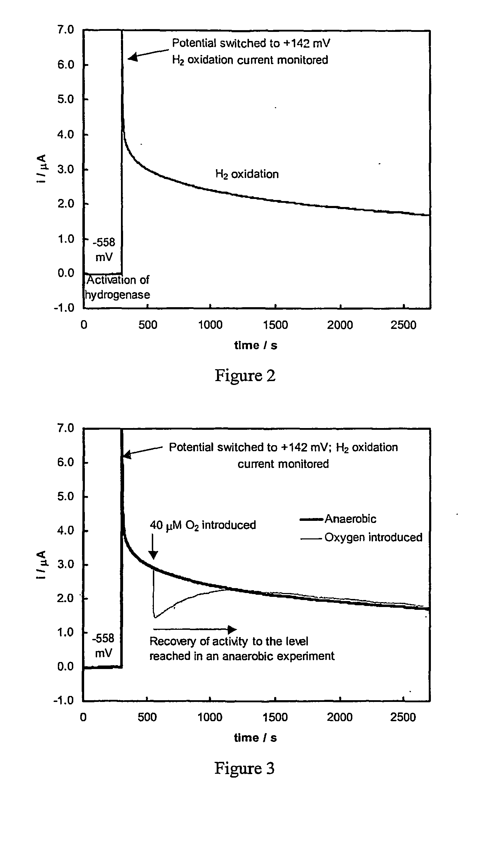

Figure 2 depicts a graph of current vs time obtained using an electrode coated with hydrogenase from *Ralstonia eutropha (Re).* The potential is initially set at -558mV to activate the enzyme, and then increased to +142mV after 300 seconds.
Figure 3 shows the results of Figure 2 and also shows the current for the same electrode when 40µM oxygen is introduced into the environment of the anode at 500 seconds.

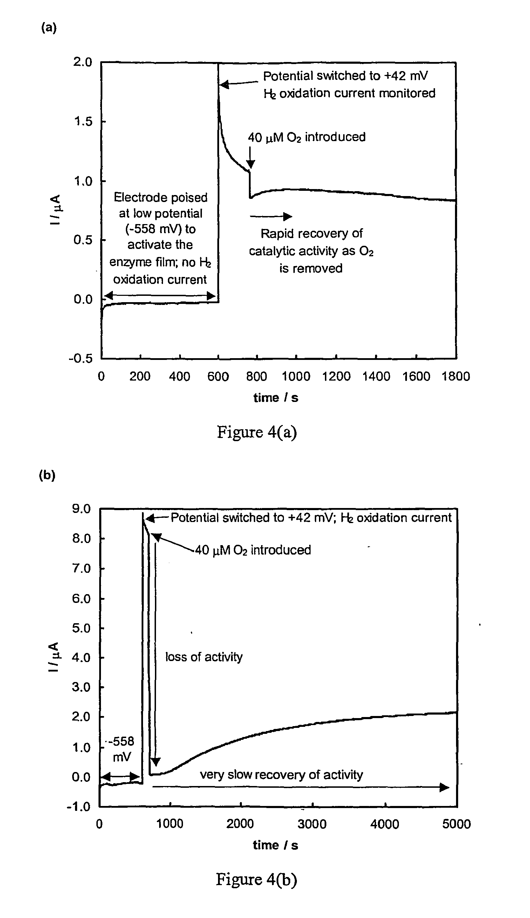

Figure 4a depicts a graph of current vs time obtained using an electrode coated with hydrogenase from *Ralstonia eutropha (Re).* The potential is initially set at -558mV to activate the enzyme, and then increased to +42mV after 600 seconds. 40µM oxygen is introduced into the environment of the anode at 800 seconds.
Figure 4b depicts a graph of current vs time obtained using an electrode coated with hydrogenase from *Allochromatium vinosum (Av).* The potential is initially set at -558mV to activate the enzyme, and then increased to +42mV after 600 seconds. 40µM oxygen is introduced into the environment of the anode at 800 seconds.

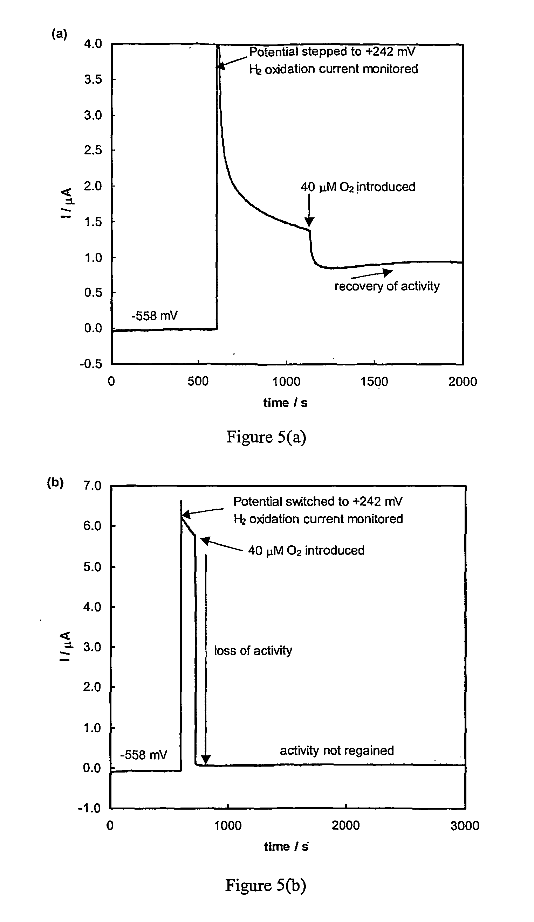

Figure 5a depicts a graph of current vs time obtained using an electrode coated with hydrogenase from *Ralstonia eutropha (Re).* The potential is initially set at -558mV to activate the enzyme, and then increased to +242mV after 600 seconds. 40µM oxygen is introduced into the environment of the anode at 800 seconds.
Figure 5b depicts a graph of current vs time obtained using an electrode coated with hydrogenase from *Allochromatium vinosum (Av).* The potential is initially set at -558mV to activate the enzyme, and then increased to +242mV after 600 seconds. 40µM oxygen is introduced into the environment of the anode at 800 seconds.

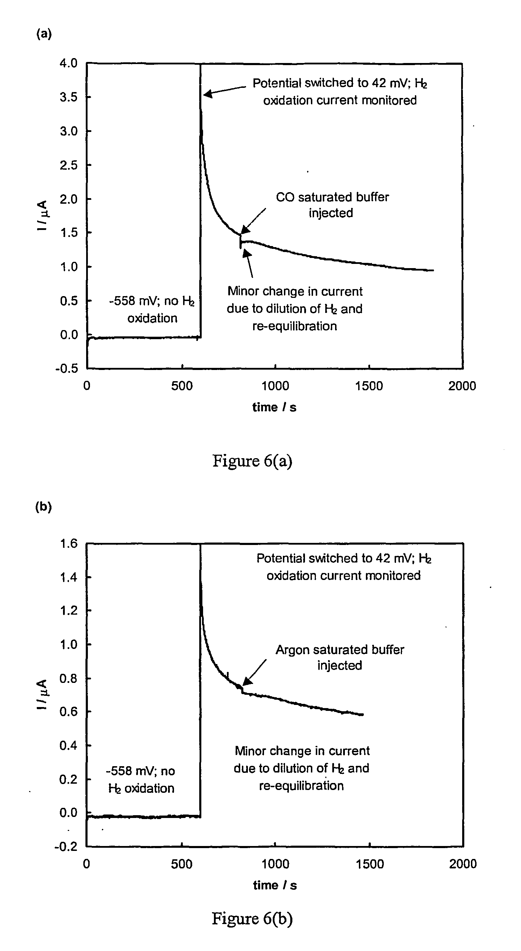

Figure 6a depicts a graph of current vs time obtained using an electrode coated with hydrogenase from *Ralstonia eutropha (Re).* The potential is initially set at -558mV to activate the enzyme, and then increased to +42mV after 600 seconds. An aliquot of CO saturated buffer is introduced into the environment of the anode at 800 seconds.
Figure 6b depicts a graph of current vs time obtained using an electrode coated with hydrogenase from *Ralstonia eutropha (Re).* The potential is initially set at -558mV to activate the enzyme, and then increased to +42mV after 600 seconds. An aliquot of argon saturated buffer is introduced into the environment of the anode at 800 seconds.

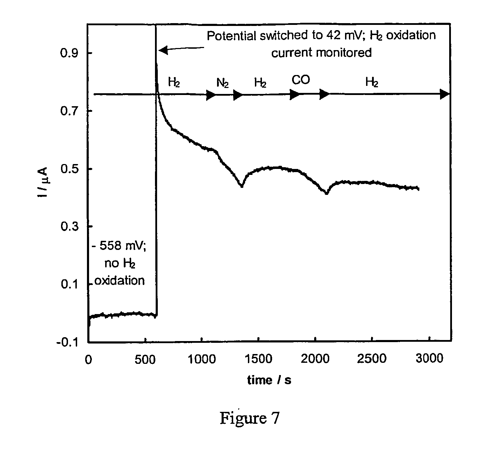

Figure 7 depicts a graph of current vs time obtained using an electrode coated with hydrogenase from *Ralstonia eutropha (Re).* The potential is initially set at -558mV to activate the enzyme, and then increased to +42mV after 600 seconds. The gaseous supply to the anode is initially hydrogen (up to 1140 seconds), then the supply is changed so that nitrogen (1140 seconds to 1380 seconds), hydrogen (1380 seconds to 1840 seconds), carbon monoxide (1840 seconds to 2080 seconds) and finally hydrogen are supplied in turn.

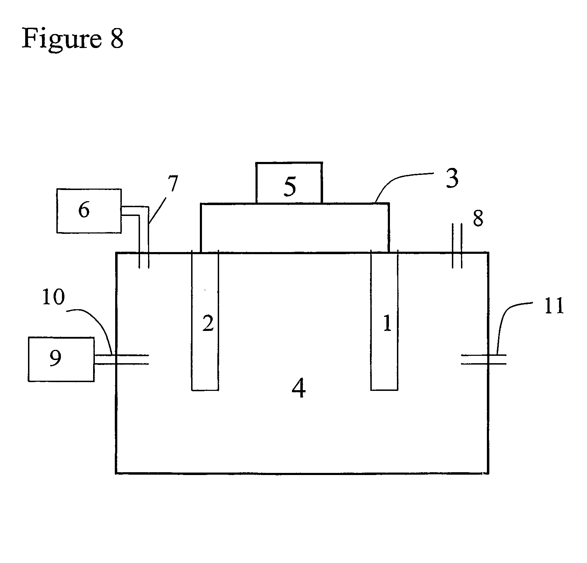

Figure 8 depicts an alternative fuel cell according to the invention.

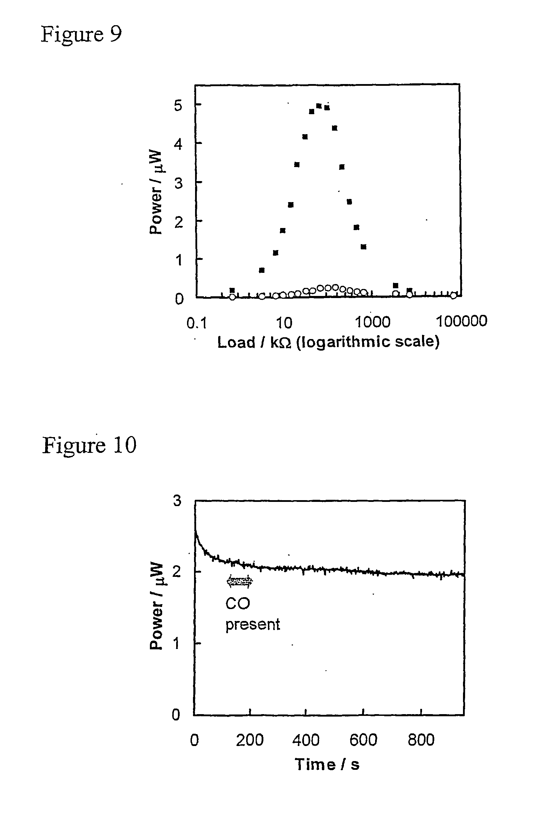

Figure 9 depicts the power output (µW) vs load (kΩ, logarithmic scale) of a membraneless fuel cell according to the invention (solid squares) and a membraneless fuel cell employing a non-oxygen-tolerant hydrogenase (open circles).
Figure 10 depicts the power output (µW) over time (s) of a fuel cell according to the invention. CO was injected into the fuel cell during the period indicated by the grey arrow (approximately at 100s to 200s).

Typically, the fuel cells of the invention comprise:
- a fuel source which provides hydrogen to an anode;
- an anode, coated with a catalyst, at which the hydrogen is oxidised;
- an oxidant source which provides an oxidant to a cathode;
- a cathode at which the oxidant is reduced and which is electrically connected to the anode via an electrical conductor; and
- an electrolyte which serves as a conductor for ions between the anode and the cathode.

The present invention may be used in combination with any fuel cell, as long as the operating conditions are sufficiently mild that the hydrogenase catalyst is not denatured. For example, fuel cells which operate at very high temperatures, or which require extreme pH conditions, may well cause the hydrogenase catalyst to denature.

Conventional fuel cells which are currently used include alkaline, proton exchange membrane, phosphoric acid, molten carbonate and solid oxide fuel cells. Of these, the most suitable for use with the present invention is the proton exchange membrane cell. These cells typically operate at temperatures of up to 90°C and at substantially neutral pH. In proton exchange membrane fuel cells the reaction of hydrogen which occurs at the anode can be described according to the following equation (1):

H₂→2H⁺+2e⁻ (1)

The electrons produced are transferred via the conductor to the cathode and, similarly, the protons are transferred to the cathode via the electrolyte. The reaction which occurs at the cathode can be described according to the following equation (2):

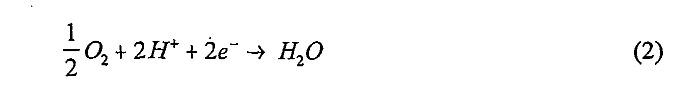

Thus, the overall reaction converts hydrogen and oxygen into water and generates an electric current.

Alternative fuel cells may involve slightly different reactions occurring at the anode and the cathode, depending on the conditions of the particular fuel cell used.

An example of a fuel cell according to the invention is described in Figure 1. In this depiction, the fuel fed to the anode is hydrogen and the oxidant is oxygen. The two electrodes are separated physically but are electrically connected via the external circuit and the electrolyte. Electrons flow from the anode to the cathode via the external load.

The fuel cells of the present invention utilise hydrogen as a fuel. The source of hydrogen may be hydrogen gas itself or the hydrogen may be derived from an alternative source such as an alcohol, including methanol and ethanol, or from fossil fuels such as natural gas. Typically, hydrogen itself is used. The hydrogen may be in a crude form and thus may contain impurities, or purified hydrogen may be used. A particular advantage of the present invention is the ability to use a crude form of hydrogen and still obtain a good conversion rate of hydrogen into protons and electrons. The fuel source is typically a gas which comprises hydrogen and which is provided to the anode. It is also conceivable that the fuel may be provided in liquid form. Generally, the fuel source also comprises an inert gas, although substantially pure hydrogen may also be used. For example, a mixture of hydrogen with one or more gases such as nitrogen, helium, neon or argon may be used as the fuel source.

The fuel source may optionally comprise further components, for example alternative fuels or other additives. The additives which may be present are preferably those which do not react with the catalyst which is coated on the positive electrode. If other entities are present which react with the catalyst, these should be present in as small an amount as possible.

Typically, hydrogen is present in the fuel source in an amount of at least 2% by volume, preferably at least 5% and more preferably at least 10% by volume, for example 25%, 50%, 75% or 90% by volume. The remainder of the fuel source is typically an inert gas.

Generally, the fuel source is supplied from an optionally pressurised container of the fuel source in gaseous or liquid form. The fuel source is supplied to the electrode via an inlet, which may optionally comprise a valve. An outlet is also provided which enables used or waste fuel source to leave the fuel cell.

The oxidant typically comprises oxygen, although any other suitable oxidant may be used. The oxidant source typically provides the oxidant to the cathode in the form of a gas which comprises the oxidant. It is also envisaged, however, that the oxidant may be provided in liquid form. Generally, the oxidant source also comprises an inert gas, although the oxidant in its pure form may also be used. For example, a mixture of oxygen with one or more gases such as nitrogen, helium, neon or argon may be used. The oxidant source may optionally comprise further components, for example alternative oxidants or other additives. An example of a suitable oxidant source is air. Typically, oxygen is present in the oxidant source in an amount of at least 2% by volume, preferably at least 5% and more preferably at least 10% by volume.

Generally, the oxidant source is supplied from an optionally pressurised container of the oxidant source in gaseous or liquid form. The oxidant source is supplied to the electrode via an inlet, which may optionally comprise a valve. An outlet is also provided which enables used or waste oxidant source to leave the fuel cell.

The anode may be made of any conducting material, for example stainless steel, brass or carbon, e.g. graphite. The surface of the anode may, at least in part, be coated with a different material which facilitates adsorption of the catalyst. The surface onto which the catalyst is adsorbed should be of a material which does not cause the hydrogenase to denature. Suitable surface materials include graphite, for example a polished graphite surface or a material having a high surface area such as carbon cloth, carbon sponge or porous carbon. Materials with a rough surface and/or with a high surface area are generally preferred.

The cathode may be made of any suitable conducting material which will enable an oxidant to be reduced at its surface. For example, materials used to form the cathode in conventional fuel cells may be used. An electrocatalyst may, if desired, be present at the cathode. This electrocatalyst may, for example, be coated or adsorbed on the cathode itself or it may be present in a solution surrounding the catalyst.

### Anode Catalyst

The fuel cells of the present invention comprise an anode having a catalyst adsorbed onto its surface. The catalyst comprises (or optionally consists of) an oxygen tolerant hydrogenase enzyme. By "oxygen tolerant", we mean that the hydrogenase activity is either maintained, or is decreased and then substantially fully recovered, following introduction of oxygen into the environment of the anode. Typically, oxygen tolerant hydrogenase enzymes maintain at least about 50%, preferably 60%, 70%, 80%, 90% or 95%, preferably at least about 99%, 99.5%, 99.9% or 99.99%, of their activity when oxygen is introduced into the environment of the anode as compared to their activity when oxygen is absent. "Substantially fully recovered" means returning to substantially the same activity, i.e. at least about 50%, preferably 60%, 70%, 80%, 90% or 95% preferably at least about 99%, 99.5%, 99.9% or 99.99%, of the activity that is observed if oxygen is not introduced. Typically, an oxygen tolerant hydrogenase will recover substantially full activity within 1000 seconds, preferably within 800 seconds, more preferably within 600 seconds, particuarly preferably within 100 seconds, 60 seconds, 30 seconds, 10 seconds or even 5 or 2 seconds, from termination of oxygen supply to the environment of the anode. Typically the rate constant for recovery of activity is at least 0.001s⁻¹ or 0.005s⁻¹ at an applied potential of from 0 to +100mV. The oxygen tolerant hydrogenase enzymes have the above-described activity when the amount of oxygen in the environment of the anode is up to 20µM, 30µM or up to 40µM, or even up to 80µM or 90µM detectable oxygen (e.g. [O₂] in injection of buffer solution), and when the applied potential is in the range of from 0 to +100mV or from 0 to +300mV.

Preferred oxygen tolerant enzymes maintain or achieve substantially full recovery of activity at potentials of from 0 to +300mV. Non-oxygen tolerant enzymes may achieve partial recovery when the potential is reduced to between -100mV and 0V, but do not achieve significant recovery of activity at potentials of from 0 to +300mV.

A simple assay can be carried out to determine whether a hydrogenase is oxygen tolerant. This assay comprises:
(a1) adsorbing the hydrogenase to be tested onto a measuring electrode, typically a graphite electrode for example a pyrolytic graphite edge (PGE) electrode;
(a2) placing the measuring electrode thus formed into an electrochemical cell using a counter electrode (e.g. a platinum wire) and a reference electrode (e.g. a saturated calomel electrode), wherein the measuring electrode is placed into an aqueous solution at pH 5-7 and a temperature of from 20 to 45°C;
(a3) supplying hydrogen to the measuring electrode at a partial pressure of from 10³ to 10⁵ Pa and supplying an oxidant to the counter electrode;
(a4) applying a potential of -400mV or a more negative potential to activate the enzyme;
(a5) changing the potential to a value in the range of from 0 to +300mV and measuring the current generated by the cell over a period of time; and
(b1) repeating the above steps, but following application of the potential in step (a5), supplying a quantity of oxygen (e.g. 40µM or 90µM) to the anode at a time To. Oxygen is typically supplied by injection, at time To, of an oxygen-saturated buffer into the environment of the anode.

Steps (a1) to (a5) act as a control and indicate the current generated over time in the absence of oxygen (anaerobic). In step (b1), in one embodiment where an oxygen tolerant enzyme is used, the current does not decrease from the values measured in step (a5) on addition of oxygen to the anode environment. That the current does not decrease means that the current is at least about 50%, preferably at least about 99.99% of the measured anaerobic current as discussed above. In an alternative embodiment also using an oxygen tolerant hydrogenase, the current will decrease and then increase again to the values obtained in step (a5). In the latter case, a time t is designated as the time lapse after time To at which hydrogenase activity is substantially recovered, and the measured current reaches substantially the same value as is obtained in step (a5) at the same time t. Substantial recovery of the current means that the current returns to at least about 50% preferably at least about 99.99% of the measured anaerobic current as discussed above. Typically, the time t at which the current will return to the values measured in step (a5) is no more than 1000 seconds, preferably no more than 800 seconds, more preferably no more than 600 seconds, e.g. no more than 100, 60, 30, 10, 5 or 2 seconds. Where a non-oxygen-tolerant enzyme is used, the current measured in step (b1) will not return to the values measured in step (a5) after oxygen supply to the system. Thus, by application of the above assay, a skilled person can determine whether any particular hydrogenase is an oxygen tolerant hydrogenase within the meaning of the present invention.

The oxygen tolerant hydrogenase enzyme used in the invention is typically also carbon monoxide tolerant. By "carbon monoxide tolerant" we mean that hydrogenase activity is substantially or fully maintained in the presence of carbon monoxide. Typically, carbon monoxide tolerant enzymes maintain at least about 80%, 85%, 90%, 95%, 98%, 99% or 99.5% of their activity, preferably at least 99.9% or 99.99% of their activity, when carbon monoxide is introduced into the environment of the anode as compared to activity when carbon monoxide is totally absent. The carbon monoxide tolerant enzymes have the above-described activity when the amount of carbon monoxide in the environment of the anode is up to 40µM, 80µM, 120µM, 200µM, 400µM, 600µM or up to 800µM detectable carbon monoxide.

A simple assay can be carried out to determine whether a hydrogenase is carbon monoxide tolerant. This assay comprises carrying out steps (a1) to (a5) described above with reference to the oxygen tolerance assay, and then (c1) repeating steps (a1) to (a5), but following application of the potential in step (a5), supplying a quantity of carbon monoxide (e.g. a 120µM aliquot) to the anode.

As for the oxygen tolerance assay, steps (a1) to (a5) act as a control to indicate the current generated over time in the absence of carbon monoxide. In step (c1), where a carbon monoxide tolerant enzyme is used, at least 80%, 85%, 90%, 95%, 98%, 99% or 99.5%, preferably at least 99.9% or 99.99%, of hydrogenase activity is maintained. Thus, the activity of the hydrogenase following introduction of carbon monoxide is at least 80%, 85%, 90%, 95%, 98%, 99% or 99.5%, preferably at least 99.9% or 99.99%, of that measured in steps (a1) to (a5) at the same time t after application of the potential in the range 0 to +300mV. By application of the above assay, a skilled person can determine whether any particular hydrogenase is a carbon monoxide tolerant hydrogenase within the meaning of the invention.

Preferred hydrogenases for use in the present invention are those from bacteria of the *Ralstonia* genus, or similar genera including *Wautersia, Alcaligenes, and Hydrogenomonas (for example Wautersia* or *Hydrogenomonas)* according to Vaneechoutte et al in Int. J. Syst. Evol. Microbiol. 54,317-327 (2004). Particularly preferred are hydrogenases from *Ralstonia eutropha* H16 (ATCC No. 17699, DSM No. 428) and *Ralstonia metallidurans* CH34 (ATCC No. 43123, DSM No. 2839), preferably *Ralstonia eutropha.*

Membrane-bound, or membrane-associated hydrogenases are preferred. A most preferred hydrogenase is the membrane-bound hydrogenase from *Ralstonia eutropha.* However, alternative hydrogenases can also be used, in particular those from bacteria or other organisms which contain an ortholog of the *hypX* gene from *Ralstonia eutropha* H16 and/or are found in oxygen-rich environments such as in the soil. Examples for alternative genera whose hydrogenases would be suitable are *Alcaligenes, Aquifex, Azotobacter, Bradyrhizobium, Burkholderia, Chromobactrium, Dechloromonas, Hydrogenovibrio, Magnetococcus, Magnetospirillum, Microbulbifer, Paracoccus, Pseudomonas, Rhizobium, Rhodobacter, Rubrivivax,* and *Streptomyces.* For example *Aquifex, Azotobacter, Bradyrhizobium, Burkholderia, Chromobactrium, Dechloromonas, Hydrogenovibrio, Magnetococcus, Magnetospirillum, Microbulbifer, Paracoccus, Pseudomonas, Rhizobium, Rhodobacter, Rubrivivax,* and *Streptomyces* are suitable.

The membrane-bound hydrogenase from *Ralstonia eutropha (Re)* comprises a small subunit HoxK and a large subunit HoxG. The large subunit HoxG incorporates the [Ni-Fe] active site. The amino acid sequence of the membrane-bound hydrogenase HoxK from *Ralstonia eutropha* is shown in SEQ ID NO: 2, with the corresponding DNA sequence pHG1 shown in SEQ ID NO: 1. The amino acid sequence of the hoxG protein is shown in SEQ ID NO:4, with the corresponding DNA sequence pHG1 shown in SEQ ID NO: 3. These proteins have also been described by Schwartz et al in J. Mol. Biol. 332 (2), 369-383 (2003).

The hydrogenase used in the invention may comprise or consist of the hydrogenase from Re or may be a fragment or variant thereof having oxygen-tolerant hydrogenase activity.

The fragment is one which retains oxygen-tolerant hydrogenase activity. The fragment is typically from about 50 to 750 amino acids in length, for example, the fragment may be at least about 100, 200, 300, 400, 500 or 600 amino acids in length.

The variant retains oxygen-tolerant hydrogenase activity. The oxygen-tolerant hydrogenase activity of the variant may be enhanced or reduced compared to the hydrogenase from Re. The variant typically shares at least about 40%, for example at least about 50%, 60%, 70%, 80%, 90% or 95% sequence identity with the Re hydrogenase.

The hydrogenase used in the invention may comprise or consist of the hydrogenase from *Ralstonia metallidurans (Rm)* or may be a fragment or variant thereof having oxygen-tolerant hydrogenase activity.

The fragment is one which retains oxygen-tolerant hydrogenase activity. The variant retains oxygen-tolerant hydrogenase activity. The oxygen-tolerant hydrogenase activity of the variant may be enhanced or reduced compared to the hydrogenase from *Rm*. The variant typically shares at least about 40%, for example at least about 50%, 60%, 70%, 80%, 90% or 95% sequence identity with the *Rm* hydrogenase.

Amino acid substitutions may be made, for example from 1, 2 or 3 to 10, 20 or 30 substitutions. Conservative substitutions may be made, for example according to the following Table. Amino acids in the same block in the second column and preferably in the same line in the third column may be substituted for each other.

| | | |
|---|---|---|
| ALIPHATIC | Non-polar | G A P |
| | | I L V |
| | Polar-uncharged | C S T M |
| | | N Q |
| | Polar-charged | D E |
| | | K R |
| AROMATIC | | H F W Y |

Variant polypeptides within the scope of the invention may be generated by any suitable method, for example by site-directed mutagenesis.

A functional mimetic or derivative of the hydrogenase from Re or Rm which has oxygen tolerant hydrogenase activity may also be used in the invention. Such an active fragment may be included as part of a fusion protein.

The hydrogenase for use in the invention may be modified by the addition of suitable amino acid residues for the covalent attachment of linkers to the electrode surface. The hydrogenase may also be chemically modified, e.g. post-translationally modified. For example, it may be glycosylated or comprise modified amino acid residues. It may also be modified by the addition of an affinity tag such as a histidine stretch, a strep-tag or a FLAG-tag to assist purification or by post translational modification including hydroxylation or phosphorylation.

The hydrogenases used in the present invention can be obtained using standard techniques. Hydrogenases can, for example, be isolated from a source of the bacterium to be used, and optionally cultured to provide a sufficient quantity of enzymes to use in the cell. Cells may then be harvested, isolated and purified by any known techniques.

Typically the hydrogenase from *Ralstonia eutropha* is purified either by Strep-Tactin affinity chromatography using a C-terminally Strep-tagged derivative of the small subunit HoxK or by a procedure described by Podzuweit et al in Biochim. Biophys. Acta 905, 435-446 (1987). Where appropriate, the hydrogenases may be produced synthetically, or may be genetically modified, for example to produce variants, using standard techniques.

The catalyst containing the hydrogenase, which optionally consists essentially of the hydrogenase or a mixture of hydrogenases, is adsorbed onto the anode. Typically the electrode surface is polished prior to adsorption of the catalyst using any suitable polishing means, for example an aqueous alumina slurry or sandpaper. Adsorption of the catalyst is then carried out, for example by applying a concentrated solution of catalyst, optionally mixed with a suitable attachment means, to the electrode surface, e.g. by pipette. Alternatively and preferably, the catalyst, optionally together with attachment means, may be made up into a dilute aqueous solution. The electrode is then inserted into the solution and left to stand. A potential may be applied to the electrode during this period if desired. The potential enables the degree of coating with the catalyst to be easily monitored. Typically, the potential will be increased and then subsequently decreased within a range of from approximately -500mV to +200mV vs SHE and the potential cycled in this manner for up to 10 minutes at a rate of 10mV/s, typically for about 5 or 6 minutes.

The catalyst may be applied in a monolayer, or as multiple layers, for example 2, 3, 4 or more layers. The catalyst need not be applied to the entire surface of the electrode, but typically at least 10% of the available surface of the anode is coated with the catalyst. The "available surface" of the anode is the surface which is in contact with the fuel. Preferably, at least 25%, 50%, 75% or 90% of the available surface is coated with the catalyst.

Typically, the catalyst layer is adsorbed to the surface of the electrode using an attachment means. The attachment means is typically a polycationic material. Examples of suitable attachment means include large polycationic materials such as polyamines including polymyxin B sulfate and neomycin.

Adsorption of the catalyst on to the anode surface has a number of advantages. Firstly, the adsorption of the hydrogenase onto the anode avoids the need for the hydrogenase to diffuse through the electrolyte to the anode surface. In this way, a potentially rate-limiting step is avoided. Further, the hydrogenase enzyme is typically in direct electronic contact with the electrode and electron transfer from hydrogenase to anode may occur rapidly. This means that the fuel cell of the invention can be operated without the need for a separate electron mediator to transfer charge from the hydrogenase to the electrode. In one embodiment of the invention, the fuel cell is operated in the substantial absence of an electron mediator.

A further advantage of the direct adsorption of the hydrogenase onto the anode is that adsorption helps to keep the enzyme in its active state. It is known that hydrogenase enzymes form both active and inactive states. A low electrode potential, such as is found at the surface of the anode, encourages the existence of the active state. Thus, hydrogenase molecules which are bound to the anode surface will in general be activated, as long as the conditions are favourable.

During operation of the fuel cell, the anode may be immersed in a suitable medium. This medium may be a solution of the catalyst, or an alternative medium, such as water, which does not contain further hydrogenase or contains only very low concentrations of hydrogenase. If hydrogenase is present in the medium, exchange may take place between the hydrogenase molecules adsorbed to the anode and those in solution. To avoid the exchange of active molecules at the anode with potentially inactive molecules in solution, the concentration of hydrogenase in the medium should be minimised. This is of particular importance in situations where the conditions are such that much of the hydrogenase in solution is inactive, especially where the hydrogenase is only weakly adsorbed to the anode. In these situations the concentration of hydrogenase in the medium should preferably be kept at a minimum, preferably below 1mM, more preferably below 0.1µM or 0.01µM.

### Cathode Catalyst

Suitable electrocatalysts for use at the cathode include those used in conventional fuel cells such as platinum. Biological catalysts may also be used for this purpose. Where biological catalysts are employed, the cathode surface is typically carbon, e.g. graphite or carbon cloth, carbon sponge or porous carbon.

Examples of biological catalysts for use at the cathode include oxidase enzymes which are capable of reducing oxygen to water. Typically, an oxidase enzyme which is capable of reducing oxygen directly to water is used. This means that the oxidase enzyme is capable of reducing oxygen to form water, substantially without producing any intermediates as by-products. Some oxidase enzymes are known which do not fully reduce oxygen to water. Rather, such enzymes produce underiserable intermediate products such as hydrogen peroxide. The presence of such intermediate products may interfere with the functioning of the fuel cell and their presence should be minimised. Therefore, oxidase catalyts which are capable of directly and fully reducing oxygen to water are preferred.

Typically, the oxidase should have a potential of at least 0.5V, when measured at pH 7 against a standard hydrogen electrode. Preferred oxidase enzymes have a potential of at least 0.6V under the same conditions, more preferably at least 0.7V. This leads to a high voltage fuel cell. Lower potentials can, however, be tolerated where the enzyme has a very high turnover number. This provides a relatively efficient fuel cell, despite the low potential.

Preferred oxidase catalysts for use in the present invention include bilirubin oxidase and laccases. These enzymes are monomeric glycoproteins and have highly stable structures. They can therefore withstand a reasonable amount of variation in temperature and pH which allows more flexibility in the operation of the fuel cell.

Preferred laccase enzymes are fungal laccases, for example the blue copper oxidase enzymes. The natural co-substrates for fungal laccases are phenolic products of lignin degradation that are oxidised to radicals. These enzymes therefore catalyse the reduction of oxygen to water with no intermediate. Further, these enzymes typically operate at potentials of 0.6V or greater. Examples of useful blue copper oxidases are those from the white rot fungus *Coriolus hirsutus,* and the fungus *Trametes versicolor.* Fragments, variants, functional mimetics and derivatives of the above described oxidases may also be used provided they maintain oxidase activity. For example, glycosylated, hydroxylated or phosphorylated oxidases, or those modified by the addition of an affinity tag such as a histidine stretch, a strep-tag or a FLAG-tag.

The bacteria discussed above can generally be obtained commercially. The bacteria may be cultered to provide a sufficient quantity of enzymes to use in the fuel cell. This may be carried out; for example, by culturing the enzyme in a situable medium in accordance with known techniques. Cells may then be harvested, isolated and purified by any known technique.

Where the cathode catalyst is platinum, it is typically coated onto the cathode in a known manner. Oxidase-containing catalysts are typically absorbed onto the cathode. This ensures that the oxidase is in direct electronic contact with the cathode. The term "direct electronic contact", as used herein, means that the catalyst is able to exchange electrons directly with the electrode. In this manner, the fuel cell of the invention may operate without the need for an independent electron mediator to transfer charge from the catalyst to the electode. A preferred feature of the present invention resides in the substantial absence of an independent electron mediator at the cathode.

A further advantage of the adsorption of an oxidase catalyst onto the cathode resides in the availability of the oxidase for reaction. There is no longer a requirement for the oxidase to diffuse through the solution to the electrode before reaction can take place. Since the oxidase is typically a very large molecule, this diffusion can be slow and is potentially rate-limiting. Adsorption of the oxidase onto the electrode thus avoids this diffusion step.

Prior to adsorbing an oxidase onto the electrode surface, the electrode is polished using a suitable polishing means. Suitable means include an aqueous alumina slurry, or polishing with sand paper. Coating of the oxidase onto the prepared surface may be carried out by, for example, directly applying a concentrated solution of oxidase, optionally mixed with a suitable attachment means, to the electrode surface, e.g. by pipette. Alternatively and preferably, the oxidase, optionally together with attachment means, may be made up into a dilute aqueous solution. The electrode is then inserted into the solution and left to stand. A potential may be applied to the electrode during this period if desired.

The cathode may be immersed in a suitable medium during operation of the fuel cell. This medium is typically water. The water, or other medium, maybe purified and/or deionised so that it does not contain any substances which might inactivate an oxidase catalyst. For example, fluoride and chloride ions are known to inactivate oxidases. Therefore, the medium into which the cathode is immersed may be substantially free of fluoride and chloride ions.

The electrocatalyst can be attached to the cathode surface as a submonolayer, a monolayer or as multiple layers, for example 2, 3, 4 or more layers. Typically, at least 10% of the available surface of the cathode is coated with an electrocatalyst, preferably with an oxidase-containing catalyst. The `available surface' of the cathode is the surface which is in contact with the oxidant source. More preferably, at least 25%, 50% or 75% and particularly preferably at least 90% of the available surface of the cathode is coated with an electrocatalyst, preferably with an oxidase-containing catalyst.

The fuel cells of the present invention comprise an electrolyte suitable for conducting ions between the two electrodes. The electrolyte should preferably be one which does not require the fuel cell to be operated under extreme conditions which would cause the hydrogenase (or oxidase if used) to denature. Thus, electrolytes which rely on high temperature or extreme pH should be avoided. Other than these requirements, any suitable electrolyte may be used for this purpose. For example, a proton exchange membrane such as Nafion^{™} may be used or any other suitable electrolyte which is known in the art.

In one emodiment of the invention, a membrane is present between the anode and the cathode. The membrane may be any solid, porous material which is permeable to proteins but which hinders the movement of oxygen molecules from one side of the membrane to the other. Membranes suitable for this use are well known in the art and include proton exchange membranes such as Nafion^{™}.

In this embodiment of the invention, the movement of oxygen from the area surrounding the cathode to that surrounding the anode is hindered by the membrane. Thus, a low concentration of oxygen is present at the anode. Whilst the hydrogenase catalyst of the present invention can operate in the presence of oxygen, oxygen typically acts as a competitive inhibitor at the catalytic active site, thereby reducing the efficiency of the catalyst. The presence of a membrane in the fuel cell, providing reduced oxygen concentration in the area of the anode, accordingly maximises the efficiency of the fuel cell.

In an alternative embodiment of the invention, depicted particularly in Figure 8, no membrane is present between the anode and the cathode, i.e. the anode and cathode are present in the same compartment of the fuel cell. A membrane is deemed to be any porous solid material which hinders movement of oxygen from one side of the membrane to the other. The term membrane includes proton exchange membranes such as Nafion^{™} which is commonly used as a solid electrolyte. In this embodiment of the invention, such solid electrolyte materials are not used, but rather liquid electrolyes are employed. Thus, the anode and cathode are typically separated only by a liquid electrolyte and are not separated by any solid material.

The absence of a membrane separating the anode and the cathode means herein that ions and other materials including protons and oxygen molecules can move from anode to cathode and vice versa through the electrolyte without passing through a membrane. The same meaning is ascribed to the term 'fuel cell does not contain a membrane between the anode and the cathode'.

As depicted in Figure 8, the fuel cells of this embodiment of the invention contain an anode 1 and a cathode 2, connected via the external circuit 3 and the external load 5. An oxygen tolerant hydrogenase catalyst as described above is provided at anode 1 and a cathode catalyst which is able to tolerate the presence of hydrogen molecules is provided at cathode 2. Fuel may be fed to the cell from fuel supply 6 through inlet 7 and oxidant may be supplied from oxidant supply 9 through inlet 10. One or more outlets 8, 11 may be provided to enable spent fuel/oxidant to exit the cell.

The cathode catalyst employed in this embodiment of the invention typically retains 100%, or at least about 80%, 90%, 95%, 98%, 99%, 99.5%, 99.9% or 99.99% activity in the presence of hydrogen compared to its normal activity i.e. its activity in the absence of hydrogen. Suitable cathode catalysts for this embodiment of the invention include biological catalysts such as an oxidase enzyme as described above.

The skilled person can easily determine the activity of a catalyst in the presence of hydrogen by carrying out the following simple assay. The assay can be performed in a gas-tight standard electrochemical cell with an electrode coated with the chosen cathode catalyst as the working electrode. The working electrode is polarised at an appropriate potential for reduction of the oxidant (e.g. O₂) and the current response is monitored. Oxidant is maintained at essentially constant concentration throughout the assay (e.g. 10% O₂ in the gas space). The remaining gas mixture is comprised of inert gases (e.g. N₂ or Ar). The experiment is repeated using a mixture of inert gases and H₂ in place of the inert gas in the gas space. An H₂-tolerant catalyst will show substantially no difference in current response in the presence or absence of H₂. By comparing the difference (if any) in current response between the two experiments, the activity of the catalyst in the presence of hydrogen (second experiment) can be determined as a percentage of the activity in the absence of hydrogen (first experiment).

A liquid electrolyte 4 which does not contain a membrane, enables ions to flow between anode and cathode. The electrolyte is typically an aqueous solution containing salts such as alkali metal halides, e.g. NaCl or KCl. Appropriate concentrations are in the range of 0.05 to 0.5 M, e.g. about 0.1 M. A pH buffer may also be present in the electrolyte, e.g. a phosphate, citrate or acetate buffer. Other additives may also be present as desired, including glycerol, polymyxin B sulphate or other attachment means which may help to stabilise the enzymes.

Whilst the efficiency of such a membraneless fuel cell may be reduced due to competitive inhibition of oxygen at the anode catalyst, such reduction may be offset by an increase in efficiency which is seen due to the free movement of ions within the electrolyte between the anode and the cathode. Furthermore, a fuel cell without a membrane can be produced at significantly lower cost.

In accordance with any of the above described embodiments, the conditions under which the fuel cell is operated must be controlled so that the enzyme(s) employed as catalysts do not denature. Furthermore, the conditions can be optimised to provide a maximum amount of the hydrogenase in the active state and thereby increase the efficiency of the system. Typically, the fuel cell is operated at a temperature of from 10 to 65°C, preferably from 15 to 55°C, more preferably from 20 to 45°C. A higher temperature may be advantageous in increasing the rate of reaction. However, temperatures above 65°C should be avoided as the hydrogenase may denature at such temperatures. The preferred pH for the medium in which the anode is immersed is from 4 to 8, preferably from 5 to 7.

Hydrogen is typically supplied to the anode at such a rate as to provide a partial pressure of from 1x10³ to 1x10⁵ Pa. The hydrogenase has been found to show hydrogen oxidation activity within this pressure range. The partial pressure may be at least 1x10⁴, 2x10⁴ or 5x10⁴ Pa. The potential at the anode when working at pH7 is typically maintained at -400mV or greater (i.e. at -400mV or a less negative potential). Preferred potentials at the anode are from -400mV to + 400mV, preferably from - 200mV to + 300mV, for example from 0 to +300mV. Each of these potentials is measured against a standard hydrogen electrode. If a relatively low potential is used, for example up to +100mV, the hydrogenase loses activity more quickly in the presence of oxygen. Therefore, higher potentials of greater than +100mV are preferred where activity needs to be maintained in the presence of oxygen. However, where a potential of from 0 to +100mV is used, the rate of recovery of hydrogenase activity after oxygen supply is removed is high. The preferred potential ranges when working at different pH may vary from the ranges stated above. The skilled person would be able to determine suitable ranges for use at a chosen pH.

A fuel cell, as described above, may be operated under the conditions described above, to produce a current in an electrical circuit. The fuel cell is operated by supplying hydrogen to the anode and supplying an oxidant to the cathode. The fuel cell of the invention is capable of producing current densities of at least 0.1mA, typically at least 0.3mA, 0.5mA or 0.8 mA per cm² of surface area of the positive electrode.

The fuel cell of the present invention is therefore envisaged as a source of electrical energy which might replace conventional platinum electrode-based fuel cells.

The present invention also provides electrodes coated with the above-described catalysts comprising an oxygen-tolerant hydrogenase enzyme. These electrodes are appropriate for use in the fuel cells of the invention or in other electrochemical cells where oxygen tolerance is required. Typically, an electrochemical cell comprising an electrode of the invention is operated using the conditions of pH, p(H₂), potential and temperature as are described above with reference to the fuel cells of the invention. Furthermore, the electrode of the invention is typically inserted into a medium during use which is the same as that described above with reference to the fuel cells of the invention.

The invention is illustrated in more detail by the following Examples, although the invention is not in any way limited to these Examples.

### Examples

### Reference Example 1: preparation of Ralstonia eutropha (Re) hydrogenase

The membrane bound hydrogenase (MBH) from Re was overproduced using a broad-host-range plasmid harboring all genes necessary for MBH synthesis, maturation, and transcriptional regulation. A *Strep-tag* II sequence was fused to the 3' end of the MBH small subunit gene, *hoxK* to facilitate purification. Re cells containing the MBH overproduction plasmid were grown at 30 °C in fructose-glycerol mineral medium in the presence of 80% H₂, 10% CO₂ and 10% O₂. After 48 hours of continuous shaking the cells were collected by centrifugation, resuspended in buffer A (50 mM Tris-HCl, pH 8.0, 50 mM NaCl) and broken by passage three times through a French pressure cell. The membranes were separated by ultra-centrifugation (1 hour, 90,000g and 4 °C) and the MBH was solubilized by incubating the membranes at 4°C in 7.5 vol/g buffer A containing 2 % Triton-X114. The cleared solubilizate was applied to a *Strep-Tactin* Superflow column which was then washed with 8 column volumes of buffer A using a BioCAD Sprint purification system. The *Strep-*tagged MBH was eluted with 6 column volumes of buffer A containing 5 mM desthiobiotin. Fractions containing MBH were combined and concentrated.

### Example 1

An electrode coated with the membrane-bound hydrogenase from *Ralstonia eutropha (Re)* was prepared by dropping 1 µl of a solution containing 1 µg of *Ralstonia eutropha* hydrogenase onto a pyrolytic graphite edge surface which had been previously polished with an aqueous slurry of 1µm alumina.

Experiments on the Re hydrogenase coated electrode were performed in a thermostatted electrochemical cell maintained at 45°C incorporating a Saturated Calomel Electrode (SCE) as the reference electrode and a platinum wire counter electrode. The cell solution was a mixed aqueous buffer (pH 6). The cell comprised gas inlet and outlet fittings and a septum for injecting liquids into the cell solution. During typical experiments, H₂ or other gases placed in the headspace equilibrated with the solution within minutes. The working electrode was clamped tightly onto an electrode rotator unit and was rotated at 2500 rpm during experiments in order to optimise the rate of transport of reactants.

The cell as described above was operated by supplying hydrogen at a partial pressure of 10³ Pa to the cell. A potential of -558mV was applied to the working electrode to ensure complete activation of the enzyme film, and the potential was then stepped to +142mV. The current generated was measured.

The resulting current measurements over the period of measurement are shown in Figure 2. For the first 300 seconds during application of the potential of -558mV, a zero current reading is obtained. After application of the +142mV potential, a current is recorded, the initial peak settling to a value of approximately 1.8 to 2.0 µA.

### Example 2

Example 1 was repeated, but an aliquot of oxygen saturated buffer containing 40µM O₂ was injected into the cell solution at a time of about 500 seconds (approximately 200 seconds after application of the +142mV potential). The current was measured in the same way as Example 1.

The results are shown in Figure 3 in the line marked "oxygen introduced". The results of Example 1 also appear marked as "anaerobic". An initial loss of activity of about 25 % is seen on injection of oxygen into the system, reflected by a drop in current of about 0.1 µA. However, recovery of activity is rapid as the oxygen in the enzyme active sites is flushed out with hydrogen.

The activity of the hydrogenase of Example 2 recovers sufficiently to reach the levels of the anaerobic experiment (Example 1) approximately 700 seconds after injection of oxygen.

### Example 3

Example 2 was repeated but a potential of +42mV rather than +142mV was employed. The experiment was carried out twice using (a) Re and (b) the non-oxygen tolerant hydrogenase from *Allochromatium vinosum (Av).* The results are depicted in Figures 4a and 4b. In Figure 4a a rapid recovery of catalytic activity is seen as oxygen is removed from the system. The rate constant for recovery is approximately 0.02 s⁻¹. However, when using Av , the drop in activity on insertion of oxygen at about 800 seconds is about 99% and leads to almost a complete loss of measurable current. Whilst recovery of activity occurs, this is very slow, the rate of recovery being 0.0004 s⁻¹.

### Example 4

Example 3 was repeated but using a potential of +242mV rather than +42mV. The results are depicted in Figures 5a and 5b. In Figure 5a a slow recovery of catalytic activity (rate constant for recovery is approximately 0.0003 s⁻¹) is seen when Re is employed as the hydrogenase. However, when using Av as the hydrogenase in Figure 5b there is no observed recovery of catalytic activity.

### Example 5

Example 2 was repeated, but a potential of +42mV rather than +142mV was employed. Further, instead of injecting oxygen into the system, aliquots of (a) a carbon monoxide saturated buffer, and (b) an argon saturated buffer, were injected at 800 seconds. The currents produced are shown in Figures 6(a) and 6(b). The inert argon buffer causes a minor change in the measured current due to dilution of hydrogen followed by reequilibration. A similar minor change is seen on introduction of carbon monoxide, demonstrating that the enzyme is not inactivated at all in the presence of carbon monoxide.

### Example 6

Example 2 was repeated, but a potential of +42mV rather than +142mV was employed. Further, instead of injecting oxygen into the system, the following gases were used: The headspace of the cell was first flushed with hydrogen. At 1140s, the gas flow was switched to nitrogen; at 1380 s the flow was switched back to hydrogen; and at 1840 s to carbon monoxide, and then finally at 2080 s back to hydrogen. The measured current over this period is shown in Figure 7. A minor reduction in activity is seen on introduction of both nitrogen and carbon monoxide. The activity is recovered quickly in both cases when hydrogen is re-introduced into the system.

### Reference Example 2: preparation of Trametes versicolor (Tv) laccase

Crude powdered extract of Tv laccase (Fluka) was suspended in sodium acetate buffer (50 mM, pH 5.5). The same buffer was used throughout the purification. Insoluble material was removed by centrifugation, and the extract was applied to a DEAE Toyopearl 650M column, washed with buffer and released from the resin with buffer containing ammonium sulphate (100 mM). Laccase-containing fractions were diluted ten-fold with buffer and applied to a Q-Sepharose column (Amersham Biosciences), washed with buffer and eluted with a 0-100 mM ammonium sulfate gradient in buffer.

### Example 7

An electrode coated with Re MBH was prepared by soaking a pyrolytic graphite edge strip ('edge' area 0.7 cm², freshly polished with 1 µm alumina) in a dilute solution of *Re* MBH for 5 minutes in a glove box. During removal from the box, the film was stored in anaerobic buffer solution.

An electrode coated with Tv laccase was prepared by soaking a pyrolytic graphite edge strip ('edge' area 0.7 cm², freshly polished with coarse sandpaper) in a dilute solution of Tv laccase for 20 minutes. Preparation was carried out in air.

A fuel cell was constructed by positioning the electrodes in a beaker containing aqueous citrate buffer (100 mM, pH5) as electrolyte and connecting a variable load (R = 10Ω to 68 MΩ) between the electrodes. H₂ and air inlet tubes were positioned close to the hydrogenase and laccase electrodes respectively. No membrane was used to separate the electrodes, but rather both were placed in the same compartment of the cell.

The variation in voltage across the cell with varying load was measured and the results (power vs load) are depicted in Figure 9 (solid squares). A maximum power output of about 5 µW was recorded.

### Example 8

Example 7 was repeated but replacing the Re hydrogenase with Av hydrogenase. The results are depicted in Figure 9 (open circles). A maximum power output of 0.2 µW was recorded.

### Example 9

A fuel cell was constructed as described in Example 7. The cell was held under open circuit conditions until time zero at which point a constant load of 330 KΩ was applied. The power output over time was recorded and is depicted in Figure 10. An initial rapid drop in power was observed over the first 100 seconds, after which the output was reasonably stable over > 15 minutes. During the period indicated by the horizontal grey arrow, CO was flushed into the beaker close to the Re MBH electrode. No detectable change in current was observed, confirming that Re MBH will catalyze oxidation of H₂ even from CO-contaminated fuels.

## Claims

1. A method of operating a fuel cell, which method comprises oxidising hydrogen at an anode having a catalyst adsorbed thereon, said catalyst comprising an oxygen tolerant hydrogenase enzyme.

2. A method according to claim 1, wherein the oxygen tolerant hydrogenase enzyme is a hydrogenase from a bacterium of the genus *Ralstonia, Alcaligenes, Aquifex, Azotobacter, Bradyrhizobium, Burkholderia, Chromobactrium, Dechloromonas, Hydrogenovibrio, Magnetococcus, Magnetospirillum, Microbulbifer, Paracoccus, Pseudomonas, Rhizobium, Rhodobacter, Rubrivivax, Streptomyces, Wautersia* or *Hydrogenomonas.*

3. A method according to claim 2, wherein the oxygen tolerant hydrogenase enzyme is a hydrogenase from a bacterium of the genus *Ralstonia, Wautersia, Alcaligenes* or *Hydrogenomonas.*

4. A method according to claim 3, wherein the oxygen tolerant hydrogenase enzyme is a hydrogenase from a bacterium of the genus *Ralstonia.*

5. A method according to claim 4, wherein the oxygen tolerant hydrogenase enzyme is a hydrogenase from *Ralstonia eutropha* or *Ralstonia metallidurans*

6. A method according to claim 5, wherein the oxygen tolerant hydrogenase enzyme is a hydrogenase from *Ralstonia eutropha* comprising the proteins HoxK having the sequence of SEQ ID NO: 2 and HoxG having the sequence of SEQ ID NO: 4.

7. A method according to claim 1, wherein the oxygen tolerant hydrogenase enzyme is a fragment or variant of the hydrogenase from *Ralstonia eutropha.*

8. A method according to any one of the preceding claims, wherein the oxygen tolerant hydrogenase enzyme is a membrane-bound or a membrane-associated hydrogenase.

9. A method according to any one of the preceding claims wherein the oxygen tolerant hydrogenase enzyme is carbon monoxide tolerant.

10. A method according to any one of the preceding claims, wherein at least a part of the surface of the anode comprises carbon.

11. A method according to any one of the preceding claims, wherein the oxygen tolerant hydrogenase enzyme is in direct electronic contact with the anode.

12. A method according to any one of the preceding claims, wherein the fuel cell is operated in the substantial absence of an electron mediator.

13. A method according to any one of the preceding claims, wherein the potential at the anode is maintained at -400mV or greater.

14. A method according to any one of the preceding claims, wherein the potential at the anode is maintained at from 0 to +300mV.

15. A method according to any one of the preceding claims, wherein the fuel cell comprises a cathode having a cathode catalyst adsorbed thereon, the cathode catalyst comprising an oxidase enzyme.

16. A method according to any one of the preceding claims, wherein the anode and the cathode are not separated by a membrane.

17. A fuel cell comprising an anode having a catalyst adsorbed thereon, said catalyst being as defined in any one of claims 1 to 9.

18. A fuel cell according to claim 17 wherein at least a part of the surface of the anode comprises carbon.

19. A fuel cell according to claim 17 or 18 further comprising a cathode having a cathode catalyst adsorbed thereon, the cathode catalyst comprising an oxidase enzyme.

20. A fuel cell according to any one of claims 17 to 19 wherein the anode and the cathode are not separated by a membrane.

21. An electrode having a catalyst adsorbed thereon, said catalyst being as defined in any one of claims 1 to 9.

22. An electrode according to claim 21 wherein at least a part of the surface of the electrode comprises carbon.

23. Use of an oxygen tolerant hydrogenase enzyme as an electrocatalyst for the oxidation of hydrogen at an electrode.

## Patentansprüche

1. Methode zum Betreiben einer Brennstoffzelle, welche Methode das Oxidieren von Wasserstoff an einer Anode mit einem daran adsorbierten Katalysator umfasst, wobei der Katalysator ein Sauerstoff-tolerantes Hydrogenase-Enzym umfasst.

2. Methode nach Anspruch 1, wobei das Sauerstoff-tolerante Hydrogenase-Enzym eine Hydrogenase von einem Bakterium der Gattung *Ralstonia, Alcaligenes, Aquifex, Azotobacter, Bradyrhizobium, Burkholderia, Chromobacterium, Dechloromonas, Hydrogenovibrio, Magnetococcus, Magnetospirillum, Microbulbifer, Paracoccus, Pseudomonas, Rhizobium, Rhodobacter, Rubrivivax, Streptomyces, Wautersia* oder *Hydrogenomonas* ist.

3. Methode nach Anspruch 2, wobei das Sauerstoff-tolerante Hydrogenase-Enzym eine Hydrogenase von einem Bakterium der Gattung *Ralsonia, Wautersia, Alcaligenes* oder *Hydrogenomonas* ist.

4. Methode nach Anspruch 3, wobei das Sauerstoff-tolerante Hydrogenase-Enzym eine Hydrogenase von einem Bakterium der Gattung *Ralstonia* ist.

5. Methode nach Anspruch 4, wobei das Sauerstoff-tolerante Hydrogenase-Enzym eine Hydrogenase von *Raltsonia eutropha* oder *Ralstonia metallidurans* ist.

6. Methode nach Anspruch 5, wobei das Sauerstoff-tolerante Hydrogenase-Enzym eine Hydrogenase von *Ralstonia eutropha* ist, umfassend die Proteine HoxK mit der Sequenz der SEQ ID NR. 2 und HoxG mit der Sequenz der SEQ ID NR. 4.

7. Methode nach Anspruch 1, wobei das Sauerstoff-tolerante Hydrogenase-Enzym ein Fragment oder eine Variante der Hydrogenase von *Ralstonia eutropha* ist.

8. Methode nach einem der vorangehenden Ansprüche, wobei das Sauerstoff-tolerante Hydrogenase-Enzym eine Membran-gebundene oder eine Membranassoziierte Hydrogenase ist.

9. Methode nach einem der vorangehenden Ansprüche, wobei das Sauerstoff-tolerante Hydrogenase-Enzym Kohlenmonoxid-tolerant ist.

10. Methode nach einem der vorangehenden Ansprüche, wobei wenigstens ein Teil der Oberfläche der Anode Kohlenstoff umfasst.

11. Methode nach einem der vorangehenden Ansprüche, wobei das Sauerstoff-tolerante Hydrogenase-Enzym in direktem elektronischen Kontakt mit der Anode steht.

12. Methode nach einem der vorangehenden Ansprüche, wobei die Brennstoffzelle praktisch in Abwesenheit eines Elektronenmediators betrieben wird.

13. Methode nach einem der vorangehenden Ansprüche, wobei das Potential an der Anode bei -400mV oder größer gehalten wird.

14. Methode nach einem der vorangehenden Ansprüche, wobei das Potential an der Anode bei von 0 bis +300mV gehalten wird.

15. Methode nach einem der vorangehenden Ansprüche, wobei die Brennstoffzelle eine Kathode mit einem daran adsorbierten Kathodenkatalysator umfasst, wobei der Kathodenkatalysator ein Oxidase-Enzym umfasst.

16. Methode nach einem der vorangehenden Ansprüche, wobei die Anode und die Kathode nicht durch eine Membran getrennt sind.

17. Brennstoffzelle, umfassend eine Anode mit einem daran adsorbierten Katalysator, wobei der Katalysator wie in einem der Ansprüche 1 bis 9 definiert ist.

18. Brennstoffzelle nach Anspruch 17, wobei wenigstens ein Teil der Oberfläche der Anode Kohlenstoff umfasst.

19. Brennstoffzelle nach Anspruch 17 oder 18, außerdem umfassend eine Kathode mit einem daran adsorbierten Kathodenkatalysator, wobei der Kathodenkatalysator ein Oxidase-Enzym umfasst.

20. Brennstoffzelle nach einem der Ansprüche 17 bis 19, wobei die Anode und die Kathode nicht durch eine Membran getrennt sind.

21. Elektrode mit einem daran adsorbierten Katalysator, wobei der Katalysator wie in einem der Ansprüche 1 bis 9 definiert ist.

22. Elektrode nach Anspruch 21, wobei zumindest ein Teil der Oberfläche der Elektrode Kohlenstoff umfasst.

23. Verwendung eines Sauerstoff-toleranten Hydrogenase-Enzyms als einem Elektrokatalysator für die Oxidation von Wasserstoff an einer Elektrode.

## Revendications

1. Procédé d'actionnement d'une pile à combustible, lequel procédé comprend l'oxydation d'hydrogène à une anode sur laquelle est adsorbé un catalyseur, ledit catalyseur comprenant une enzyme hydrogénase tolérante à l'oxygène.

2. Procédé selon la revendication 1, dans lequel l'enzyme hydrogénase tolérante à l'oxygène est une hydrogénase d'une bactérie du genre *Ralstonia, Alcaligenes, Aquifex, Azotobacter, Bradyrhizobium, Burkholderia, Chromobactrium, Dechloromonas, Hydrogenovibrio, Magnetococcus, Magnetospirillum, Microbulbifer, Paracoccus, Pseudomonas, Rhizobium, Rhodobacter, Rubrivivax, Streptomyces, Wautersia* ou *Hydrogenomonas.*

3. Procédé selon la revendication 2, dans lequel l'enzyme hydrogénase tolérante à l'oxygène est une hydrogénase d'une bactérie du genre *Ralstonia, Wautersia, Alcaligenes* ou *Hydrogenomonas.*

4. Procédé selon la revendication 3, dans lequel l'enzyme hydrogénase tolérante à l'oxygène est une hydrogénase d'une bactérie du genre *Ralstonia.*

5. Procédé selon la revendication 4, dans lequel l'enzyme hydrogénase tolérante à l'oxygène est une hydrogénase de *Ralstonia eutropha* ou *Ralstonia metallidurans.*

6. Procédé selon la revendication 5, dans lequel l'enzyme hydrogénase tolérante à l'oxygène est une hydrogénase de *Ralstonia eutropha* comprenant les protéines HoxK ayant la séquence de SEQ ID NO: 2 et HoxG ayant la séquence de SEQ ID NO:4.

7. Procédé selon la revendication 1, dans lequel l'enzyme hydrogénase tolérante à l'oxygène est un fragment ou une variante de l'hydrogénase de *Ralstonia eutropha.*

8. Procédé selon l'une quelconque des revendications précédentes, dans lequel l'enzyme hydrogénase tolérante à l'oxygène est une hydrogénase liée à une membrane ou associée à une membrane.

9. Procédé selon l'une quelconque des revendications précédentes, dans lequel l'enzyme hydrogénase tolérante à l'oxygène est tolérante au monoxyde de carbone.

10. Procédé selon l'une quelconque des revendications précédentes, dans lequel au moins une partie de la surface de l'anode comprend du carbone.

11. Procédé selon l'une quelconque des revendications précédentes, dans lequel l'enzyme hydrogénase tolérante à l'oxygène est en contact électronique direct avec l'anode.

12. Procédé selon l'une quelconque des revendications précédentes, dans lequel la pile à combustible est actionnée en l'absence substantielle d'un médiateur électronique.

13. Procédé selon l'une quelconque des revendications précédentes, dans lequel le potentiel à l'anode est maintenu à -400 mV ou plus.

14. Procédé selon l'une quelconque des revendications précédentes, dans lequel le potentiel à l'anode est maintenu de 0 à +300 mV.

15. Procédé selon l'une quelconque des revendications précédentes, dans lequel la pile à combustible comprend une cathode sur laquelle est adsorbé un catalyseur de cathode, le catalyseur de cathode comprenant une enzyme oxydase.

16. Procédé selon l'une quelconque des revendications précédentes, dans lequel l'anode et la cathode ne sont pas séparées par une membrane.

17. Pile à combustible comprenant une anode sur laquelle est adsorbé un catalyseur, ledit catalyseur étant tel que défini dans l'une quelconque des revendications 1 à 9.

18. Pile à combustible selon la revendication 17, dans laquelle au moins une partie de la surface de l'anode comprend du carbone.

19. Pile à combustible selon la revendication 17 ou 18, comprenant en outre une cathode sur laquelle est adsorbé un catalyseur de cathode, le catalyseur de cathode comprenant une enzyme oxydase.

20. Pile à combustible selon l'une quelconque des revendications 17 à 19, dans laquelle l'anode et la cathode ne sont pas séparées par une membrane.

21. Electrode sur laquelle est adsorbé un catalyseur, ledit catalyseur étant tel que défini dans l'une quelconque des revendications 1 à 9.

22. Electrode selon la revendication 21, au moins une partie de la surface de l'électrode comprenant du carbone.

23. Utilisation d'une enzyme hydrogénase tolérante à l'oxygène en tant qu'électrocatalyseur pour l'oxydation de l'hydrogène à une électrode.
